Europäisches Patentamt

European Patent Office

Office européen des brevets

(11) Veröffentlichungsnummer: **0 442 027 A2**

## EUROPÄISCHE PATENTANMELDUNG

(21) Anmeldenummer: 90113069.0

(22) Anmeldetag: 09.07.90

(51) Int. Cl.⁵: **B30B 9/30**, B08B 3/02

(30) Priorität: 15.02.90 DE 4004670
19.03.90 DE 4008959

(43) Veröffentlichungstag der Anmeldung:
**21.08.91 Patentblatt 91/34**

(84) Benannte Vertragsstaaten:
**AT BE CH DE DK ES FR GB GR IT LI LU NL SE**

(71) Anmelder: **Bachmann, Arnd**
**Groner Torstrasse 24**
**W-3400 Göttingen(DE)**

(72) Erfinder: **Bachmann, Arnd**
**Groner Torstrasse 24**
**W-3400 Göttingen(DE)**

(74) Vertreter: **Arendt, Helmut, Dipl.-Ing.**
**Patentanwalt Bergiusstrasse 2 c**
**W-3000 Hannover 51(DE)**

(54) **Materialrückgewinnungsverfahren für Einwegverpackungen und Einrichtung zur Durchführung des Verfahrens.**

(57) Für ein Verfahren zur Materialrückgewinnung von Einwegverpackungen, insbesondere von schalenförmigen Verpackungsbehältern für die Fernverpflegung wird vorgeschlagen, die Behälter mit der offenen Seite nach unten weisend nacheinander über eine von unten nach oben und anschließend unter eine von oben nach unten gerichtete Reinigungsdusche zu führen, anschließend einer Materialverdichtung durch vertikal gerichtete Kräfte und abschließend einem senkrecht dazu verlaufenden Preßvorgang zur weiteren Verdichtung des Materials zu unterwerfen.

Fig. 2

## MATERIALRÜCKGEWINNUNGSVERFAHREN FÜR EINWEGVERPACKUNGEN UND EINRICHTUNG ZUR DURCHFÜHRUNG DES VERFAHRENS

Die Erfindung betrifft ein Verfahren zur Materialrückgewinnung von Einwegverpackungen, insbesondere von schalenförmigen Verpackungsbehältern für die Fernverpflegung.

In der Bundesrepublik werden von Arbeitnehmern täglich mehrere Millionen Menüs verzehrt, welche in schalenförmigen Einwegverpackungen aus Aluminium oder Kunststoff bei Unternehmen, welche keine eigene Essensversorgung ihrer Mitarbeiter herstellen, angeliefert werden. Die Einwegschalen sind wegen ihrer Sperrigkeit nach der Benutzung nicht wieder verwertet worden. Ein tägliches Einsammeln ist wegen des großen Volumens zu kostenaufwendig.

Der Erfindung liegt die Aufgabe zu Grunde, ein Verfahren und eine Einrichtung zu schaffen, womit es möglich ist, das Material der Einwegpackungen wirtschaftlich lohnend zurückzugewinnen. Die Erfindung zeichnet sich dadurch aus, daß die Behälter mit der offenen Seite nach unten weisend nacheinander über eine von unten nach oben und anschließend unter eine von oben nach unten gerichtete Reinigungsdusche geführt werden, anschließend einer Materialverdichtung durch vertikal gerichtete Kräfte und anschließend einem senkrecht dazu verlaufenden Preßvorgang zur weiteren Verdichtung des Materials unterworfen werden. Diese Reinigungsprozesse können sowohl in umgekehrter Reihenfolge als auch gleichzeitig ablaufen. Zur vorteilhaften Durchführung des Verfahrens ist eine Einrichtung vorgesehen, die aus einem Gehäuse besteht, in welchem Waschdüsen ober- und unterhalb eines Transportbandes angeordnet und am Transportbandende zwei Verdichtungsstationen angeordnet sind, die in zwei zueinander senkrechten Kraftrichtungen wirken und von welchen die zweite als Gegendruckkolben ausgebildet ist.

Bei einer anderen Ausführung der Einrichtung ist vorgesehen, daß der dem Transportband nächstgelegenen Verdichtungsstation als zweite Verdichtungsstation ein umlaufendes Endlosband nachgeordnet ist, welches den aus der ersten Verdichtungsstation austretenden, flachgedrückten, mit Wellen oder Falten versehenen Preßling mit nach außen weisenden Mitnehmern erfaßt und durch einen, das Volumen des Preßlings verringernden Verdichtungsschacht zwängt.

In weiterer vorteilhafter Gestaltung wird vorgeschlagen, das Endlosband als Kette mit nach außen weisenden Zapfen auszubilden. Sie kann um zwei vertikal übereinander angeordnete Antriebsund Umlenkräder geführt werden.

Diese Ausführung vereinfacht die Einrichtung nach dem Hauptpatent (Patentanmeldung) erheblich. Es wird das Komprimieren der zusammengewalzten Verpackung über eine aufwendige Hydraulik oder Pneumatik erspart. Die Kette erfaßt mit ihren nach außen weisenden Zapfen die gewalzte Verpackung mittig und preßt sie durch den engsten Querschnitt des Verdichtungsschachtes, so daß das flache Teil über diesen Zwangspaß, der durch drehbare Elemente begrenzt wird, zusammengedrückt wird. Das Zusammendrücken wird dadurch erleichtert, daß die Verzahnung der Walzen der ersten Verdichtungsstation, die Einwegverpackung nicht einfach zu einem flachen Teil zusammenwalzt. Diese weist Faltungen auf, so daß das Zusammenschieben des vorgepreßten Teils zu einem kompakten Preßling erleichtert wird.

Zur Wiedergewinnung wirft der Essensteilnehmer die Schale in die erfindungsgemäß gestaltete Einrichtung. Sie spült die groben Speisereste ab. In einem zweiten Arbeitsgang wird die vorgereinigte Schale zusammengepreßt und fällt nach dem Preßvorgang in einen Plastiksack oder Abfallwagen. Da sich Gerüche innerhalb von Stunden entwickeln können, wird der Anfall von gepreßten Menüschalen täglich entsorgt, indem der Plastiksack oder der Abfallwagen mit den Preßlingen entfernt und zugebunden in einem separat stehenden Sammelbehälter deponiert wird. Dieser Sammelbehälter wird beispielsweise monatlich einmal abgeholt. Die Preßlinge werden, nachdem der Plastiksack entfernt ist, gewaschen und zu Aluminiumschrottblocks gepreßt, welche in die Aluminiumschmelze gegeben werden. Besonders bemerkenswert ist, daß die Energie für die Aluminiumgewinnung aus Schrott nur etwa 5% der Energie für die Herstellung von Neu-Aluminium beträgt.

Eine weitere Möglichkeit der Entsorgung der Preßlinge besteht in der Zwischenlagerung in einem Gefäß mit einem Geruchverschluß. In dem Sammelbehälter befindet sich Wasser von 1 cm Höhe. Dieses Wasser ist mit einer umweltfreundlichen Chemikalie verhellt, welche sämtliche Geruchsoder Gärungsbakterien, die am Preßling haften, neutralisiert. Monatlich kann das Gefäß gegen ein neues ausgetauscht werden. Die im Gefäß befindliche Wassersäule steigt automatisch mit dem anwachsenden Volumen der Preßlinge, so daß ständig sämtliche Preßlinge abdeckt sind und sich eine Isolierschicht zur Vermeidung von Gerüchen bildet.

In der Zeichnung sind lediglich zwei von mehreren Ausführungsbeispielen einer Einrichtung zur Durchführung des erfindungsgemäßen Verfahrens schematisch dargestellt und nachstehend erläutert.

Es zeigen:

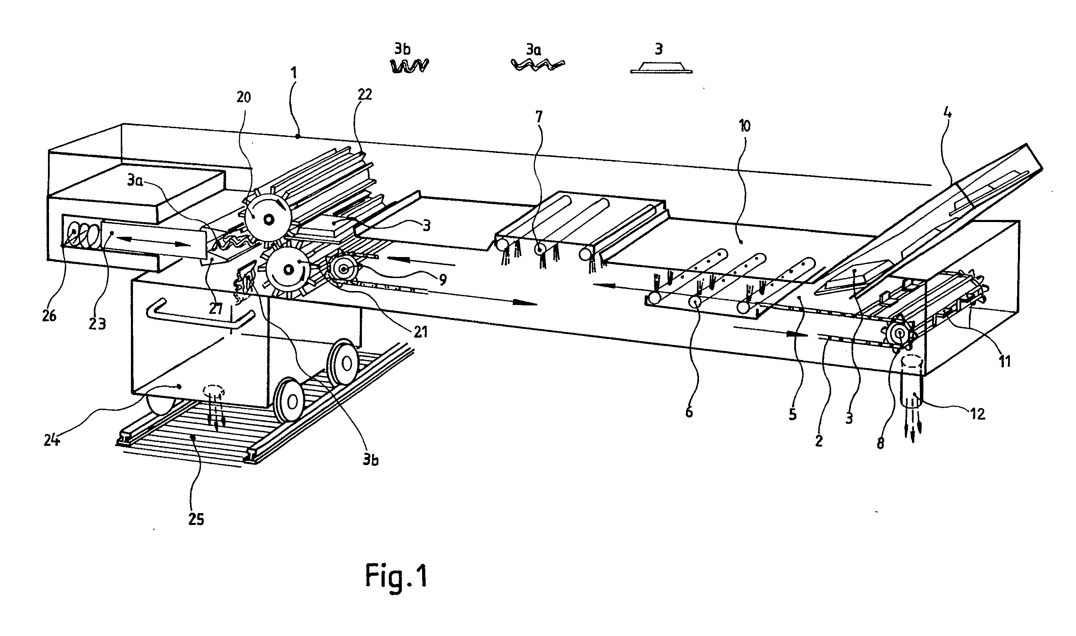

Fig. 1    die Seitenansicht einer ersten Einrichtung,

Fig. 2   die Seitenansicht einer zweiten Einrichtung und

Fig. 3   die vergrößerte Darstellung des Verdichtungsschachtes der Einrichtung gem. Fig . 2 in Draufsicht.

Innerhalb eines Gehäuses 1 ist ein Transportband 2 angeordnet, welches aus Aluminium gefertigte Menüschalen 3, die über eine Rutsche oder Schurre 4 in den Gehäuseinnenraum 5 gelangen, zwei Reinigungsstationen zuführt. Bei dem gezeigten Beispiel werden die Menüschalen zunächst einer von unten nach oben wirkenden Reinigungsdusche 6 und anschließend einer in umgekehrter Richtung wirkenden Reinigungsdusche 7 zugeführt. Die Menüschalen ruhen dabei auf dem Förderband 2, das mit Antriebs- bzw. Umlenkrollen 8 und 9 versehen ist. Mit Abstand oberhalb des Transportbandes ist eine Anlagefläche 10 vorgesehen, welche das Abheben der leichten Menüschalen vom Transportband während des Reinigungsbades verhindert. Das Transportband zeigt erhabene Rippen 11, die etwa in einem Abstand auf der Oberfläche des Transportbandes angebracht sein können, der etwa der Länge der Menüschalen entspricht. Das Abwasser kann den Innenraum über einen oder mehrere Abläufe 12 verlassen.

In Förderrichtung hinter dem Transportband befindet sich die erste Materialverdichtungsstation, die aus den beiden Verdichtungswalzen 20 und 21 besteht. Die Walzen tragen auf ihrem Mantel zahnförmige Erhebungen 22, mit welchen sie ineinandergreifen. Sie erfassen eine Menüschale 3 und ziehen diese unter erheblicher Volumenverringerung zwischen sich hindurch. Dieser Preßling ist mit 3a bezeichnet. Er wird gegen einen Gegendruckkolben 23 gedrückt und bei dem gezeigten Beispiel in horizontaler Richtung gestaut. Der dadurch unter weiterer erheblicher Volumenverringerung zusammengedrückte Preßling ist mit 3b bezeichnet. Er fällt nach dem horizontalen Stauchvorgang in einen Abfallwagen 24. Dieser Abfallwagen kann beispielsweise täglich entsorgt werden. Ablaufendes Tropfwasser wird in einer unter dem Wagen befindlichen Tropfkammer 25 aufgefangen.

Der Gegendruckkolben 23 ist in Förderrichtung federnd gelagert, um ein Ausweichen bei überhöhtem Preßdruck zu ermöglichen. Die Gegendruckfeder trägt die Bezugsziffer 26. Der Kolben ist mit einer aus zwei Leitflächen 27 bestehenden trichterförmigen Zuführöffnung versehen.

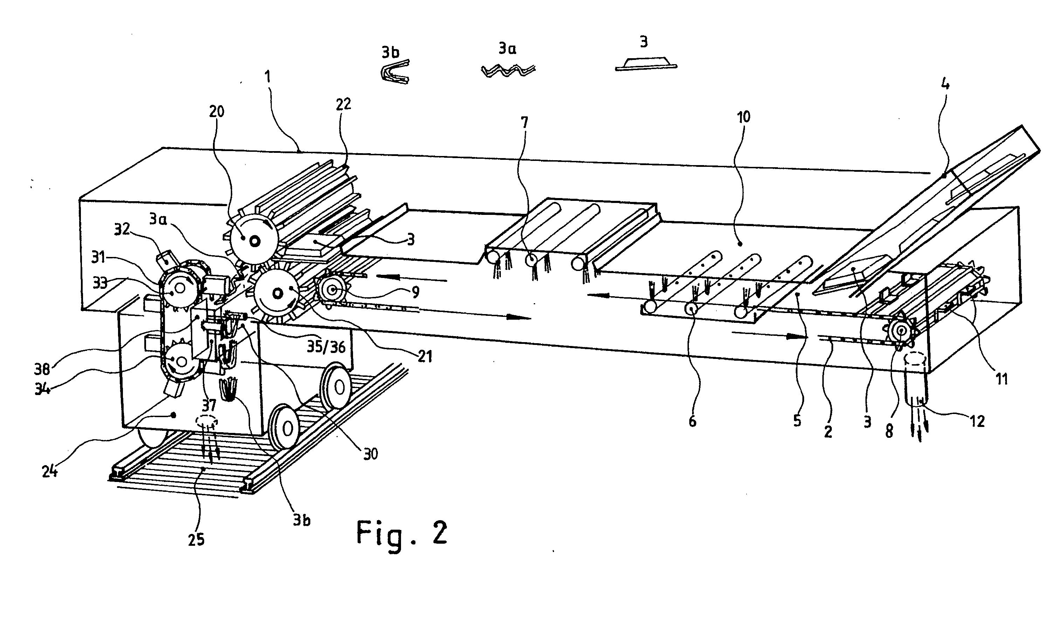

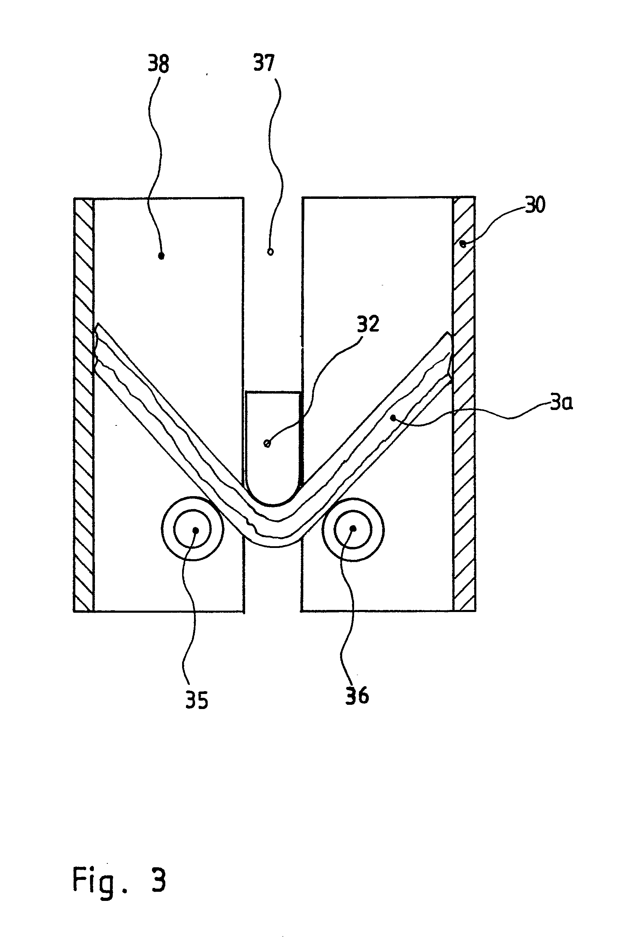

Bei der Einrichtung nach den Figuren 2 und 3 wird der Preßling 3a nicht gegen einen Gegendruckkolben, sondern durch die Zugkraft einer Kette 31, die mit auswärts weisenden Mitnehmern in Form von Zapfen 32 ausgerüstet ist, durch einen Verdichtungsschacht 30 gedrückt. Die Kette wird um vertikal übereinander angeordnete Antriebsund Umlenkräder 33 und 34 geführt.

Der Preßling 3a erfährt durch den engen Verdichtungsschacht 30 in Verbindung mit der Stauchkraft des Mitnehmers 32 eine erhebliche Volumenverringerung. Der endgültig zusammengepreßte Preßling ist mit 3b bezeichnet. Er fällt in einen Abfallwagen 24. Dieser kann beispielsweise täglich entsorgt werden. Ablaufendes Tropfwasser wird in einer unter dem Wagen befindlichen Tropfkammer 25 aufgefangen.

Innerhalb des Verdichtungsschachtes 30 sind zwei Rollenelemente 35 und 36 in Form von Wälzlagern angeordnet. Durch den Abstand zwischen diesen wird der Preßling 3a mit Hilfe des Mitnehmerzapfens 32 hindurchgepreßt, so daß er durch eine Faltung seine endgültige, erheblich verkleinerte Form erhält. Der Zapfen 32 greift dabei durch einen Schlitz 37 einer Seitenwand 38 des Schachtes 30.

Zur Zeit werden außer den bekannten Einwegpackungen aus Aluminium auch Kunststoffbehältnisse für Einwegessen und andere Nahrungsmittel verwende. Diese Kunststoffverpackungen können gegenwärtig nicht entsorgt werden. Der Marktanteil der Kunststoffverpackungen liegt bei etwa 8%. Um auch ein Recycling von Kunststoffverpackungen zu ermöglichen, ist nach einem weiteren Erfindungsmerkmal der Austausch der Verdichtungselemente Walzen und Kolben gegen eine nicht näher dargestellte Schneidvorrichtung möglich. Die übrigen Vorrichtungsteile der Gesamteinrichtung bleiben unverändert. Ein Zusammenpressen von Einwegverpackungen aus Kunststoff ist nicht möglich, da das Kunststoffmaterial elastisch ist und durch eine Federdynamik nach dem Preßvorgang nicht zu einem verdichtenden Preßling umgewandelt werden kann. Die Schneidvorrichtung ist durch Adapteranschlüsse so einfach gegen die maschinellen Preßelemente auch durch Laien austauschbar, daß die Gesamteinrichtung sowohl Aluminiummaterial als auch Kunststoff verarbeiten und einem Recyclingprozeß zuführen kann. Diese Austauschbarkeit soll in ihrer Einfachheit im Rahmen der übrigen Entnahmemöglichkeiten von Einzelteilen zu Reinigungs- und Spülzwecken aus hygienischen Gründen liegen.

**Patentansprüche**

1.   Verfahren zur Materialrückgewinnung von Einwegverpackungen, insbesondere von schalenförmigen Verpackungsbehältern für die Fernverpflegung, dadurch gekennzeichnet, daß die Behälter mit der offenen Seite nach unten weisend nacheinander über eine von unten nach oben und anschließend unter eine von oben nach unten gerichtete Reinigungsdusche geführt werden, anschließend einer Materialverdichtung durch vertikal gerichtete Kräfte und abschließend einem senkrecht dazu verlaufenden Preßvorgang zur weiteren Verdichtung des Materials unterworfen werden.

2. Verfahren nach Anspruch 1, dadurch gekennzeichnet, daß die Reinigungsprozesse in umgekehrter Reihenfolge ablaufen.

3. Verfahren nach Anspruch 1, dadurch gekennzeichnet, daß die Reinigungsprozesse gleichzeitig ablaufen.

4. Einrichtung zur Durchführung des Verfahrens nach Anspruch 1, dadurch gekennzeichnet, daß innerhalb eines Gehäuses (1) Waschdüsen (6, 7) ober- und unterhalb eines Transportbandes (2) angeordnet und am Transportbandende zwei Verdichtungsstationen (20,21,23,30,31) vorgesehen sind, die in zwei zueinander senkrechten Kraftrichtungen wirken.

5. Einrichtung nach Anspruch 4, dadurch gekennzeichnet, daß die dem Transportband nächstgelegene Verdichtungsstation aus zwei Preßwalzen (20, 21) besteht, zwischen welchen die Verpackungsbehälter hindurchgeführt werden.

6. Einrichtung nach Anspruch 5, dadurch gekennzeichnet, daß die Oberflächen der Walzen mit radial auswärtsweisenden Vorsprüngen (22) versehen sind.

7. Einrichtung nach Anspruch 6, dadurch gekennzeichnet, daß die Walzen mit einer Verzahnung versehen sind.

8. Einrichtung nach Anspruch 6 oder 7, dadurch gekennzeichnet, daß die Walzen mit ihren Vorsprüngen ineinandergreifen.

9. Einrichtung nach einem der Ansprüche 5 bis 8, dadurch gekennzeichnet, daß die Walzen vertikal federnd und mit einstellbarem Anpreßdruck gelagert sind.

10. Einrichtung nach einem der Ansprüche 1 bis 9, dadurch gekennzeichnet, daß die flachgepreßten Verpackungen von den Walzen gegen einen elastisch gelagerten Kolben (23) drückbar sind.

11. Einrichtung nach Anspruch 10, dadurch gekennzeichnet, daß der Kolben (23) unter Federvorspannung steht.

12. Einrichtung nach Anspruch 10 oder 11, dadurch gekennzeichnet, daß der Kolben von Leitflächen (27) eingefaßt ist.

13. Einrichtung nach einem der Ansprüche 4 bis 12, dadurch gekennzeichnet, daß das Transportband mit Mitnehmern (11) bestückt ist.

14. Einrichtung nach einem der Ansprüche 4 bis 13, dadurch gekennzeichnet, daß oberhalb des Transportbandes eine Führungsfläche (10) für die zu reinigenden Verpackungsbehälter angeordnet ist.

15. Einrichtung nach einem der Ansprüche 1 bis 14, dadurch gekennzeichnet, daß das Gehäuse (1) mit einer die Verpackungsbehälter dem Transportband zuführenden Schurre (4) ausgerüstet ist.

16. Einrichtung nach einem der Ansprüche 1 bis 15, dadurch gekennzeichnet, daß unterhalb der letzten Verdichtungsstation ein Abfallwagen mit Tropfwasserablauföffnungen für die tägliche Entsorgung vorgesehen ist.

17. Einrichtung nach Anspruch 16, dadurch gekennzeichnet, daß ein Tropfwasserbehälter (25) als Standplatz für den Abfallwagen dient.

18. Einrichtung nach Anspruch 16, dadurch gekennzeichnet, daß sich innerhalb des Abfallwagens eine Tropfwasserkammer befindet.

19. Einrichtung nach Anspruch 4, dadurch gekennzeichnet, daß die Verdichtungsstationen gegen eine Schneidvorrichtung zum Zerschneiden der Einwegverpackungen in schmale, wenige Millimeter breite Streifen austauschbar sind.

20. Einrichtung nach einem der Ansprüche 4 bis 9, dadurch gekennzeichnet, daß der dem Transportband nächstgelegenen Verdichtungsstation als zweite Verdichtungsstation ein umlaufendes Endlosband (31) nachgeordnet ist, welches den aus der ersten Verdichtungsstation (21, 22) austretenden, flachgedrückten Preßling mit nach außen weisenden Mitnehmern (32) erfaßt und durch einen, das Volumen des Preßlings verkleinernden Verdichtungsschacht (30) zwängt.

21. Einrichtung nach Anspruch 20, dadurch gekennzeichnet, daß der Verdichtungsschacht am unteren Ende mit einem engsten Durchtrittsquerschnitt versehen ist, der durch den Abstand zweier Rotationselemente gebildet ist.

22. Einrichtung nach Anspruch 20, dadurch gekennzeichnet, daß das Endlosband eine Kette mit nach außen weisenden Zapfen (32) ist.

23. Einrichtung nach einem der Ansprüche 20 bis 22, dadurch gekennzeichnet, daß die Kette um zwei vertikal übereinander angeordnete Antriebs- und Umlenkräder (33,34) geführt ist.

24. Einrichtung nach einem der Ansprüche 20 bis 23, dadurch gekennzeichnet, daß als Rotationselemente Wälzlager eingesetzt sind.

Fig.1

Fig. 2

Fig. 3